# EUROPÄISCHE PATENTSCHRIFT

(11) **EP 2 815 996 B1**
(45) Veröffentlichungstag und Bekanntmachung des Hinweises auf die Patenterteilung: **20.03.2019**
(21) Anmeldenummer: 14002065.2
(22) Anmeldetag: 16.06.2014
(51) Int. Cl.: B65H 23/02, B65H 23/025, D06C 3/06, F16C 13/06

(54) **Walze zum Führen und/oder Breitstrecken einer laufenden Warenbahn**
Roller for guiding and/or stretching the width of a moving web of material
Cylindre destiné à guider et/ou à déplisser une bande de marchandise déroulante

(30) Priorität: 21.06.2013 DE 102013010373; 17.10.2013 DE 102013017281
(43) Veröffentlichungstag der Anmeldung: 24.12.2014
(73) Patentinhaber: Texmag GmbH Vertriebsgesellschaft, 8800 Thalwil (CH)
(72) Erfinder: Wulf, Hans, 33335 Gütersloh (DE); Vonderheiden, Jörg, 22941 Bargteheide (DE)
(74) Vertreter: Witzany, Manfred

(56) Entgegenhaltungen:
- EP-A1- 0 527 291
- DE-A1- 2 638 903
- DE-A1- 4 414 317
- DE-B- 1 019 902
- DE-U1-202006 012 802

## Beschreibung

Die Erfindung betrifft eine Walze zum Führen und/oder Breitstrecken einer laufenden Warenbahn mit schwenkbar an einem Stützkörper abgestütztem Walzensegment. Diese Walzensegmente sind dabei von der Warenbahn umschlungen und stehen mit Stelleinrichtungen in Wirkverbindung.

Aus der DE 26 38 903 A1 ist eine Führungs- und Breitstreckwalze bekannt, die von mehreren Walzensegmenten gebildet ist. Die einzelnen Walzensegmente werden dabei von PTFE-Scheiben aneinander abgestützt, so dass sie sich gegenseitig berühren. Dabei erfolgt die Verstellung der einzelnen Walzensegmente als starrer Block, so dass die Randsegmente relativ große Stellwege benötigen. Da andererseits die Walzensegmente von einer gemeinsamen Welle durchsetzt sind, können auf diese Weise nur äußerst geringe Schwenkwinkel realisiert werden. Durch die Verstellung der Walzensegmente im Block geht außerdem der technische Vorteil der Aufteilung der Walze in einzelne Segmente verloren, so dass diese Walze wirkungsmäßig wie eine starre Schwenkwalze ist. Diese Walze kann damit auch keinerlei Breitstreckwirkung erzielen.

Aus der DE 20 2006 012 802 U1 ist eine Führungs- und Breitstreckwalze bekannt, die von einzelnen Walzensegmenten gebildet sind. Diese sind durch O-Ringe aneinander abgestützt. Sobald die Walzensegmente gegeneinander verschwenkt werden, liegen diese O-Ringe nur noch einseitig an den Stirnseiten der Walzensegmente an, so dass an der öffnenden Seite keine Führung durch die O-Ringe mehr gegeben ist.

Aus der DE 44 14 317 A1 ist eine weitere Walze bekannt, die aus drei Walzensegmenten besteht. Diese Walzensegmente sind jedoch nicht gegeneinander verschwenkbar sondern vielmehr stark miteinander verbunden. Damit kann diese Walze keinerlei Breitstreckwirkung ausüben.

Aus der DE 1 019 902 ist eine gattungsgemäße Führungs- und Breitstreckwalze bekannt. Diese besteht aus einzelnen Walzensegmenten, die über elastische Ringe miteinander gekoppelt sind. Die beiden äußersten Walzensegmente sind über Steuerhebel in ihrer Lage verstellbar. Diese Verstellbewegung wird über die elastischen Ringe auf die anderen Walzensegmente übertragen. Auf diese Weise ist nur eine mäßige Genauigkeit der Verstellung der einzelnen Walzensegmente erzielbar. Dies wirkt sich insbesondere dann aus, wenn Warenbahnen unterschiedlicher Breite gefahren werden. Bei schmalen Warenbahnen mit mittigem Bahnlauf wird die Einflussnahme auf die Warenbahn - bedingt durch die elastische Ankopplung der Stellbewegung an die Walzensegmente - sehr ungenau. Insbesondere im Textilbereich hat sich diese Walze jedoch bewährt und bildet den Ausgangspunkt der vorliegenden Erfindung.

Aus der DE 40 25 232 A1 ist eine weitere Führungs- und Breitstreckwalze bekannt, die von mehreren Walzensegmenten gebildet ist. Diese Walzensegmente sind auf einem zentralen Rohr exzentrisch abgestützt. Durch Verdrehen dieses Rohres kann die Schrägstellung der einzelnen Walzensegmente eingestellt werden. Diese Ansteuerung der einzelnen Walzensegmente ist sehr aufwendig. Insbesondere ist das zentrale Rohr mit seinen Exzentern recht schwierig herzustellen, was die Walze insgesamt recht teuer macht. Insbesondere im Bereich von Papierbahnen mit großen Walzenlängen lässt sich auf diese Weise die erforderliche Stellgenauigkeit der Walzensegmente nicht mehr realisieren.

Der Erfindung liegt die Aufgabe zugrunde, eine Walze der eingangs genannten Art zu schaffen, die sich durch eine erhöhte Stellgenauigkeit bei vertretbar geringen Herstellungskosten auszeichnet.

Diese Aufgabe wird erfindungsgemäß mit den folgenden Merkmalen gelöst.

Die erfindungsgemäße Walze dient zum Führen und oder Breitstrecken einer laufenden Warenbahn, wobei die Führungsfunktion häufig die wichtigere darstellt. Insbesondere bei Papierbahnen ist aufgrund der äußerst geringen Dehnbarkeit der Warenbahn eine exakte Walzenverstellung wichtig. In vielen Anwendungsfällen kommt eine Verschwenkung der gesamten Walze wegen der damit verbundenen Wegdifferenzen der Warenbahn an beiden Kantenbereichen nicht in Betracht. Für diese Anwendungsfälle weist die um eine Walzenachse drehbare Walze Walzensegmente auf, die an einem zentralen Stützkörper verschwenkbar abgestützt sind. Die Walzensegmente sind zylindrisch geformt und axial aneinander gesetzt. Der Stützkörper verläuft vorzugsweise koaxial zur Walzenachse. Die Schwenkachsen dieser Walzensegmente verlaufen dabei quer zum Stützkörper und vorzugsweise in Bahnlaufrichtung. Die Schwenkachsen können mit der Bahnlaufrichtung jedoch auch einen Winkel von bis zu 80° einschließen, ohne die Funktion der Walze zu beeinträchtigen. Die Walzensegmente sind von der Warenbahn umschlungen, so dass diese die von der Warenbahn erfasste Fläche der Walze bilden. Die axial äußersten Walzensegmente dieser Anordnung von Walzensegmenten stehen dabei jeweils mit einer deren Schwenklage bestimmenden Stelleinrichtung in Wirkverbindung. Diese Stelleinrichtungen bestimmen damit nur die Schwenklage der beiden äußersten Walzensegmente. Um auch die inneren Walzensegmente exakt in jene Schwenklage zu bringen, die von den Stelleinrichtungen vorgegeben ist, ist zwischen benachbarten Walzensegmenten jeweils mindestens ein Lager vorgesehen. Dieses Lager berührt die benachbarten Walzensegmente an mindestens zwei Berührpunkten gleitend oder wälzend. Diese befinden sich jeweils beidseits der Schwenkachse. Auf diese Weise ist sichergestellt, dass die inneren Walzensegmente keinerlei Freiheitsgrad in Schwenkrichtung haben. Die inneren Walzensegmente werden daher durch die äußeren Walzensegmente zwangsgeführt. Auf diese Weise ist sichergestellt, dass die Stellbewegung der Stelleinrichtungen mit hoher Genauigkeit auf die inneren Walzensegmente übertragen wird. Diese Genauigkeit reicht auch zum Führen von Papierbahnen aus, die über eine beträchtliche Breite verfügen. Da zwischen den einzelnen Walzensegmenten lediglich mindestens ein Lager vorgesehen sein muss, ergibt sich ein überraschend einfacher Aufbau, so dass die Walze kostengünstig erstellt und in Stand gehalten werden kann.

Insbesondere bei kürzeren Walzen, wie sie beispielsweise im Textilbereich Einsatz finden, besteht diese aus relativ wenigen Walzensegmenten. In diesem Fall reicht als Lager zur Übertragung der Stellkräfte zwischen benachbarten Walzensegmenten ein Gleitlager aus. Damit ergibt sich ein besonders einfacher und damit kostengünstiger Aufbau. Die Stellkräfte werden trotzdem hinreichend genau auf die einzelnen Walzensegmente übertragen.

Insbesondere im Bereich von Papierherstellungsmaschinen sind die Anforderungen an die Präzision der Bahnführung aufgrund der hohen Bahnlaufgeschwindigkeiten besonders hoch. Außerdem sind die Walzen - bedingt durch entsprechend große Bahnbreiten - sehr lang und bestehen damit aus sehr vielen einzelnen Walzensegmenten. Um unter diesen schwierigen Bedingungen eine präzise Verstellung der einzelnen Walzensegmente über eine Vielzahl von Lagern zu gewährleisten, werden bei diesem Einsatzzweck Wälzlager vorgezogen.

Im Falle eines Wälzlagers ist es vorteilhaft, wenn es Wälzkörper aufweist, die an den jeweils benachbarten Walzensegmenten anliegen. Damit können die Wälzkörper die Stellkräfte optimal von Walzensegment zu Walzensegment übertragen. Die Form der Wälzkörper spielt dabei keine Rolle. Es können kugelförmige, tonnenförmige oder zylindrische Wälzkörper eingesetzt werden, ohne die Funktion der Walze in irgendeiner Form negativ zu beeinflussen.

Für die Abstützung der Walzensegmente am Stützkörper haben sich Pendelwälzlager bewährt. Auf diese Weise ergibt sich eine reibungsarme Abstützung der Walzensegmente in Verschwenkrichtung.

Um die Walzensegmente sicher gegeneinander zu drücken, ist es günstig, wenn die Stelleinrichtungen miteinander gekoppelt sind. Die Stelleinrichtungen werden vorzugsweise im gleichen Winkel zueinander angestellt, so dass die Lager zwischen den Walzensegmenten für eine gleiche Ausrichtung der jeweiligen Walzensegmente sorgen.

Soll die Walze zusätzlich eine Breitstreckwirkung besitzen, so ist es erforderlich, die Walzensegmente in unterschiedlichen Winkeln zueinander anzustellen. Zu diesem Zweck sind die Stelleinrichtungen miteinander verstellbar gekoppelt. Durch Verstellen dieser Kopplung kann dann der Anstellwinkel zwischen den äußersten Walzensegmenten eingestellt werden.

Eine einfache Kopplung ergibt sich mittels einer Koppelstange. Vorzugsweise ist diese außenseitig zu den Walzensegmenten vorgesehen. Damit läuft die Warenbahn zwischen den Walzensegmenten und der Koppelstange, so dass die Koppelstange den Bahnlauf selbst nicht unmittelbar, sondern lediglich mittelbar über die Verschwenkung der Walzensegmente beeinflusst. Alternativ kann die Koppelstange auch innenseitig durch die Walze geführt sein. Sie ist dann vorzugsweise durch den hohl ausgebildeten Stützkörper geführt. Diese Variante erleichtert das Einführen der Warenbahn, die nicht zwischen zwei Teilen eingefädelt werden muss.

Für die Stelleinrichtungen haben sich schwenkbar am Stützkörper abgestützte Scheiben bewährt. Diese drücken vorzugsweise an mehreren Punkten gegen die jeweils äußeren Walzensegmente und geben auf diese Weise deren Verschwenkung vor.

Beim Verschwenken der Walzensegmente aus ihrer axial ausgerichteten Ruhelage heraus verringert sich aus geometrischen Gründen deren gegenseitiger Abstand. Dieser Effekt ist zwar bei kleinen Schwenkwinkeln gering, führt jedoch ohne weitere Maßnahmen zu einer Zwängung des Lagers. Zur Lösung dieses Problems ist das mindestens eine Lager axial federnd gelagert. Hierzu haben sich insbesondere Tellerfedern bewährt. Diese Federwirkung soll jedoch nur die gegenseitige Annäherung der Walzensegmente beim Verschwenken ausgleichen und nicht die Übertragung der Stellbewegung von Walzensegment zu Walzensegment stören.

Der Federweg des mindestens einen Lagers wird derart gewählt, dass er höchstens die Hälfte des axialen Weges beim Verschwenken der Walzensegmente ausmacht. Damit ist sichergestellt, dass die Stellbewegung praktisch nicht von Federn beeinflusst wird.

Alternativ oder zusätzlich kann die gegenseitige Annäherung der Walzensegmente auch durch eine längsverschiebbare Abstützung der Walzensegmente am Stützkörper ausgeglichen werden. Damit sind keine Federn im Bereich der Lager mehr erforderlich. Beim Verschwenken der Walzensegmente werden diese vielmehr auseinander gedrückt, was tolerierbar ist.

Um die gegenseitige Annäherung der Walzensegmente bei deren Verschwenkung wenigstens annähernd auszugleichen, sind diese im Anlagebereich des mindestens einen Lagers wenigstens im Teilbereich - in axialer Richtung betrachtet - konvex gekrümmt. Durch diese Maßnahme wird erreicht, dass der gegenseitige Abstand der Walzensegmente umso größer wird, je weiter man sich von dem Anlagebereich des Lagers in der Neutralstellung der Walzensegmente entfernt. Damit wird dem Effekt der gegenseitigen Annäherung der Walzensegmente beim Verschwenken entgegengewirkt. Damit kann ein Federweg reduziert werden, was die Präzision der Bewegung der einzelnen Walzensegmente entsprechend verbessert.

Im günstigsten Fall wird der Anlagebereich der Walzensegmente am mindestens einen Lager so gewählt, dass er - in einer gedachten, radialen Schnittebene durch die Walzenachse - wenigstens im Teilbereich kreisförmig ist. In dieser Schnittbetrachtung haben die Walzensegmente die Form eines Krümmungskreises, der einen Radius und einen Mittelpunkt aufweist. Der Radius ist dabei so gewählt, dass er dem axialen Abstand des mindestens einen Lagers von der Schwenkachse des Walzensegments entspricht. Dieser Abstand ist dabei in axialer Projektion zu bestimmen. Der Mittelpunkt dieses Krümmungskreises befindet sich in einer Normalebene zur Walzenachse, die auch die Schwenkachse enthält. Der Mittelpunkt des Krümmungskreises ist dabei von der Walzenachse so weit entfernt wie das mindestens eine Lager. Da das mindestens eine Lager stets im gleichen Winkel wie die Walzensegmente verschwenkt sind, gilt diese Bedingung in allen Schwenklagen. Durch diese Maßnahme wird erreicht, dass die gegenseitige Annäherung der Walzensegmente bei deren Verschwenkung exakt kompensiert wird. Im Bereich des mindestens einen Lagers ändert sich damit der gegenseitige Abstand der Walzensegmente bei deren Verschwenkung nicht. Damit kann auf eine federnde Lagerung der Lager komplett verzichtet werden. Eine Federung des mindestens einen Lagers dient dann lediglich dem Ausgleich von Fertigungstoleranzen sowie dem Erzielen eines Breitstreckeffekts. Für die Übertragung der Schwenkbewegung von Walzensegment zu Walzensegment ist dagegen die Feder nicht mehr erforderlich, so dass der Federweg zu Gunsten einer präziseren Verstellung der Walzensegmente auch sehr klein gewählt werden kann.

Der Erfindungsgegenstand wird beispielhaft anhand der Zeichnung erläutert, ohne den Schutzumfang zu beschränken.

Es zeigt:
- Figur 1: eine räumliche Prinzipdarstellung einer Führungs- und Breitstreckwalze,
- Figur 2: eine Schnittdarstellung durch die Walze gemäß Figur 1 entlang der Schnittlinie II - II,
- Figur 3: die Schnittdarstellung gemäß Figur 2 an einer alternativen Ausführungsform mit Wälzlager,
- Figur 4: die Schnittdarstellung gemäß Figur 3 an einer weiteren alternativen Ausführungsform mit Doppelbiegebalken als Federelement,
- Figur 5: die Darstellung gemäß Figur 4 in verschwenkter Lage der Walzensegmente,
- Figur 6: die Schnittdarstellung gemäß Figur 4 an einer weiteren alternativen Ausführungsform mit konvex geformten Walzensegmenten und
- Figur 7: die Darstellung gemäß Figur 6 bei verschwenkten Walzensegmenten.

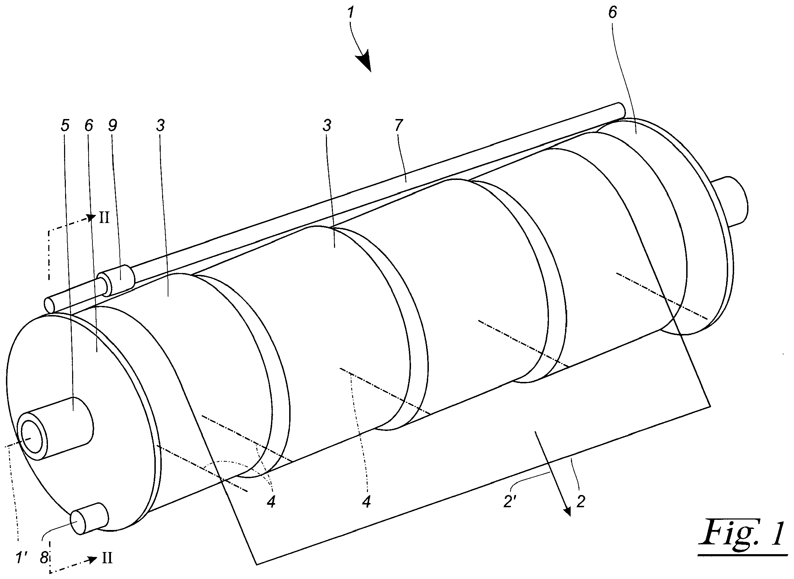

Die Figur 1 zeigt eine für alle gezeigten Ausführungsbeispiele gültige räumliche Prinzipdarstellung einer Walze 1, die sich um eine Walzenachse 1' dreht, zum Führen und Breitstrecken einer laufenden Warenbahn 2. Die Walze 1 besteht aus mehreren hintereinander angeordneten Walzensegmenten 3, die um Schwenkachsen 4 verschwenkbar an einem zentralen Stützkörper 5 abgestützt sind. Der Stützkörper 5 ist koaxial zur Walzenachse 1' ausgerichtet. Im Ausführungsbeispiel gemäß Figur 1 sind vier der Walzensegmente 3 dargestellt. Der Erfindungsgegenstand ist jedoch nicht auf diese Anzahl begrenzt. Es können vielmehr auch weniger oder mehr Walzensegmente 3 eingesetzt werden. Bei den heute üblichen großen Bahnbreiten wird in der Regel eine sehr große Anzahl von Walzensegmenten 3 vorzusehen sein. Die Darstellung mit vier Walzensegmenten 3 dient lediglich der Veranschaulichung des Prinzips dieser Walze 1.

Der Stützkörper 5 ist als Rohr ausgebildet, um Gewicht einzusparen. Alternativ kann der Stützkörper 5 jedoch auch aus einem Vollmaterial gebildet sein. Es spielt auch keine Rolle, ob sich der Stützkörper 5 mit der Walze 1 umdreht oder ob die Walze auf dem Stützkörper 5 drehbar gelagert ist.

An beiden Enden weist die Walze 1 Stelleinrichtungen 6 in Form von Steuerscheiben auf. Diese sind über eine Koppelstange 7 miteinander gekoppelt. Die Stelleinrichtungen 6 sind über entsprechende Schwenkachsen 4 verschwenkbar am Stützkörper 5 abgestützt. Die Koppelstange 7 erzwingt dabei eine gleichförmige Übertragung der Bewegung von einer der Stelleinrichtungen 6 zur gegenüberliegenden Stelleinrichtung 6. Die in Figur 1 links dargestellte Stelleinrichtung 6 ist mit einem Aktor 8 gekoppelt, der eine Schwenklage der Stelleinrichtung 6 vorgibt. Diese Schwenklage wird über in der Figur 1 nicht erkennbare Lager an die Walzensegmente 3 weitergeleitet. Damit werden alle Walzensegmente um den gleichen Winkel wie die Stelleinrichtung 6 um ihre jeweilige Schwenkachse 4 verschwenkt.

Die Koppelstange 7 überträgt die Schwenkbewegung der Stelleinrichtung 6 auf die gegenüberliegende Stelleinrichtung 6, so dass sichergestellt ist, dass alle Walzensegmente 3 die gleiche Schwenklage einnehmen. Dies reicht zum Führen der in Richtung 2' laufenden Warenbahn 2 völlig aus. Je nach Schwenklage der Walzensegmente 3 wird die Warenbahn 2 entweder nach links oder nach rechts, aber in jedem Fall quer zur Richtung 2' gezogen. Damit kann der Aktor 8 von einer Warenlaufregeleinrichtung angesteuert werden, die von einem Bahnkantensensor, welcher die Warenbahn 2 erfasst, beeinflusst ist.

Soll zusätzlich eine Breitstreckwirkung auf die Warenbahn 2 ermöglicht werden, so ist es erforderlich, dass die einzelnen Walzensegmente 3 geringfügig unterschiedlich in ihrem Winkel angestellt werden. Zu diesem Zweck ist die Koppelstange 7 längenverstellbar ausgebildet. Die Verstellung geschieht mittels einer Gewindehülse 9, die auf einem mit einem Außengewinde versehenen Abschnitt der Koppelstange 7 aufgeschraubt ist. Durch Verdrehen der Gewindehülse 9 kann damit die Länge der Koppelstange 7 variiert werden. Dies ist auch im laufenden Betrieb möglich. Insbesondere ist auch daran gedacht, die Gewindehülse 9 von einem weiteren, nicht dargestellten weiteren Aktor zu betätigen, so dass kein manueller Eingriff bei der Variation der Breitstreckwirkung erforderlich ist.

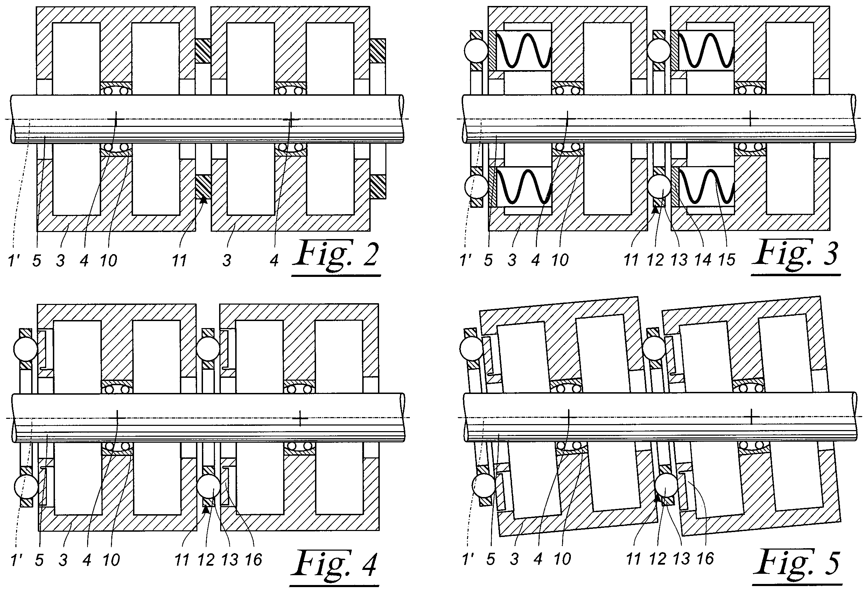

Die Figur 2 zeigt eine Schnittdarstellung durch die Walze 1 gemäß Figur 1 entlang der Schnittlinie II - II. Zur besseren Übersichtlichkeit sind dabei nur zwei Walzensegmente 3 dargestellt.

Die Walzensegmente 3 stützen sich über Pendelwälzlager 10 am zentralen Stützkörper 5 ab. Damit ist das Walzensegment 3 um die Schwenkachse 4 verschwenkbar. Die Pendelwälzlager 10 können dabei so ausgebildet sein, dass sie zusätzlich eine axiale Verschiebung der Walzensegmente 3 entlang des Stützkörpers 5 ermöglichen. Alternativ kann die Verschiebbarkeit der Walzensegmente 3 auch über nicht dargestellte Schiebeschlitten erfolgen. Beide Varianten gestatten auf sehr einfache Weise einen entsprechenden Längenausgleich der Walzensegmente beim Verschwenken. Alternativ oder zusätzlich kann dieser Längenausgleich auch durch die Formgebung der Walzensegmente 3 und/oder mittels eines Federweges realisiert werden.

Um die Verschwenkung von einem der Walzensegmente 3 auf das nächste zu übertragen, ist zwischen den Walzensegmenten 3 jeweils ein Lager 11 vorgesehen. Dieses Lager 11 ist im einfachsten Fall als Gleitlager ausgeführt, wie es in Figur 2 dargestellt ist. Damit lassen sich die Schwenkbewegungen zwischen den Walzensegmenten 3 - bedingt durch das Auftreten von Haftreibung - nur mit mäßiger Qualität übertragen. Die Übertragung der Stellkräfte ist jedoch erheblich genauer als beispielsweise bei einer Übertragung mittels Gummiringen.

Die Figur 3 zeigt eine alternative Ausführungsform der Walze 1 gemäß Figur 2, wobei gleiche Bezugszeichen gleiche Teile benennen. Im Folgenden wird lediglich auf die Unterschiede zur Ausführungsform gemäß Figur 2 eingegangen.

Das Lager 11 ist bei dieser Ausführungsform als Wälzlager ausgebildet. Es weist Wälzkörper 12 in Form von Kugeln auf. Alternativ könnten die Wälzkörper 12 auch zylindrisch oder tonnenartig geformt sein. Die Wälzkörper 12 liegen unmittelbar an den benachbarten Walzensegmenten 3 an. Sie sind in einem Käfig 13 so geführt, dass sichergestellt ist, dass jeweils einer der Wälzkörper 12 oberhalb und unterhalb der Schwenkachse 4 vorgesehen ist. Auf diese Weise ist gewährleistet, dass die Schwenkbewegung präzise von einem Walzensegment 3 zum nächsten übertragen wird.

Beim Verschwenken der Walzensegmente 3 reduziert sich deren Normalabstand, was zu einer Zwängung der Wälzkörper 12 führen würde. Um dies auszugleichen, sind die Wälzkörper 12 an einer Seite federnd gelagert. Das Walzensegment 3 weist hierzu einen Stempel 14 auf, der mittels einer Feder 15 gegen den Wälzkörper 12 gedrückt wird. Die Feder 15 ist dabei derart eingestellt, dass nur ein sehr geringer Federweg möglich ist. Damit beeinflusst diese federnde Übertragung der Stellkräfte die Genauigkeit der Übertragung nur geringfügig. Alternativ könnten die Pendelwälzlager 10 auch verschiebbar gelagert sein, um die oben beschriebene Zwängung auszugleichen.

Die Figur 4 zeigt eine weitere Ausführungsform der Walze gemäß Figur 3, wobei gleiche Bezugszeichen wieder gleiche Teile benennen. Im Folgenden wird lediglich auf die Unterschiede zur Ausführungsform gemäß Figur 3 eingegangen.

Bei dieser Ausführungsform ist der Stempel 14 und die Feder 15 durch einen Biegebalken 16 ersetzt. Dieser Biegebalken entsteht durch eine dünnwandige Ausbildung des Walzensegments 3. Drückt der Wälzkörper 12 beim Verschwenken der Walzensegmente 3 verstärkt gegen diesen Biegebalken 16, so wird dieser geringfügig verbogen. Diese Situation ist in der Figur 5 dargestellt. Da die oberen und unteren Wälzkörper 12 in gleicher Weise gegen den Biegebalken 16 drücken, werden die Biegebalken 16 in gleicher Weise deformiert. Dies hat zur Folge, dass auf diese Weise keinerlei relativen Schwenkwinkel zwischen den einzelnen Walzensegmenten 3 zugelassen werden. Die Übertragung der Schwenkbewegung von Walzensegment 3 zu Walzensegment 3 ist daher exakt.

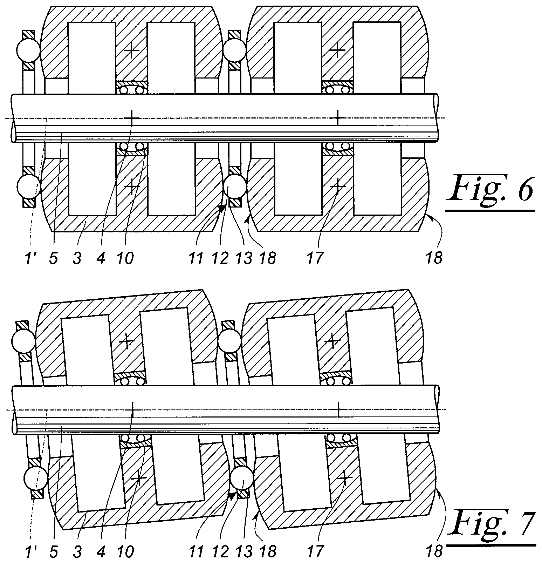

Die Figur 6 zeigt eine alternative Ausführungsform der Vorrichtung gemäß Figur 4, wobei gleiche Bezugszeichen wieder gleiche Teile benennen. Im Folgenden wird nur auf die Unterschiede zur Ausführungsform gemäß Figur 4 eingegangen.

Die Ausführungsform gemäß Figur 6 verzichtet auf jegliche Feder 15. Stattdessen ist das Walzensegment 3 im Anlagebereich der Wälzkörper 12 konvex gerundet ausgebildet. In der dargestellten Schnittdarstellung besitzt das Walzensegment 3 an der dem Wälzkörper 12 zugewandten Seite eine kreisförmige Krümmung. Der Krümmungsradius entspricht dabei dem axialen Abstand zwischen dem Wälzkörper 12 und der Schwenkachse 4 des Walzensegments 3. Dieser Abstand ist dabei in axialer Projektion zu bestimmen. Ein Mittelpunkt 17 dieses Krümmungskreises 18 liegt dabei radial zu einer Walzenachse 1' vom Schnittpunkt zwischen der Walzenachse 1' und der Schwenkachse 4 entfernt. Die Entfernung ist dabei gleich der Entfernung der Wälzkörper 12 von der Walzenachse 1'. Diese gekrümmte Fläche der Walzensegmente 3 kann über das gesamte Walzensegment 3 vorgesehen sein, so dass sich eine Torusform ergibt. Drehen sich die Lager 11 mit den Walzensegmenten 3 synchron um, so reicht es aus, nur lokale Führungsbahnen für die Wälzkörper 12 auszubilden.

Die Figur 7 zeigt die Situation bei verschwenkten Walzensegmenten 3. Man erkennt, dass aufgrund der gewählten Geometrie der Walzensegmente 3 die gegenseitige Annäherung der Walzensegmente 3 exakt kompensiert ist. Damit können die Wälzkörper 12 zwängungsfrei verschwenken, wenn sich die Walzensegmente 3 um ihre Schwenkachsen 4 verschwenken. Ein Ausgleich der Bewegung über einen entsprechenden Federweg ist damit entbehrlich aber realisierbar. Auf diese Weise ergibt sich eine exakte Übertragung der Stellkräfte von Walzensegment 3 zu Walzensegment 3.

Es versteht sich, dass die gleichen Mechanismen wie oben dargestellt auch zur Übertragung der Stellkräfte von deren Stellvorrichtungen 6 auf die Walzensegmente 3 genutzt werden können. Außerdem ist daran gedacht, die verschiedenen Techniken der Ausführungsbeispiele miteinander zu kombinieren, um Probleme bei unterschiedlichen Anwendungen optimal zu lösen.

### Bezugszeichenliste

- 1: Walze
- 1': Walzenachse
- 2: Warenbahn
- 2': Richtung
- 3: Walzensegment
- 4: Schwenkachse
- 5: Stützkörper
- 6: Stelleinrichtung
- 7: Koppelstange
- 8: Aktor
- 9: Gewindehülse
- 10: Pendelwälzlager
- 11: Lager
- 12: Wälzkörper
- 13: Käfig
- 14: Stempel
- 15: Feder
- 16: Biegebalken
- 17: Mittelpunkt
- 18: Krümmungskreis

## Patentansprüche

1. Walze zum Führen und/oder Breitstrecken einer laufenden Warenbahn (2), wobei die Walze (1) um eine Walzenachse (1') drehbar ist, in deren Bereich ein Stützkörper (5) vorgesehen ist, an dem um quer zu diesem verlaufende Schwenkachsen (4) verschwenkbare Walzensegmente (3) abgestützt sind, welche von der Warenbahn (2) wenigstens teilweise umschlungen sind, wobei zwischen benachbarten Walzensegmenten (3) mindestens ein Lager (11) vorgesehen ist, welches die Walzensegmente (3) beidseits der Schwenkachse (4) gleitend oder wälzend berührt, **dadurch gekennzeichnet, dass** jedes der Walzensegmente (3) um jeweils eine der Schwenkachsen (4) verschwenkbar ist, und die äußersten Walzensegmente (3) mit deren Schwenklage bestimmenden Stelleinrichtungen (6) in Wirkverbindung stehen.

2. Walze nach Anspruch 1, **dadurch gekennzeichnet, dass** das mindestens eine Lager (11) ein Gleitlager ist.

3. Walze nach Anspruch 1 oder 2, **dadurch gekennzeichnet, dass** das mindestens eine Lager (11) ein Wälzlager ist.

4. Walze nach Anspruch 3, **dadurch gekennzeichnet, dass** das Lager (11) Wälzkörper (12) aufweist, die an jeweils beiden benachbarten Walzensegmenten (3) anliegen.

5. Walze nach mindestens einem der Ansprüche 1 bis 4, **dadurch gekennzeichnet, dass** mindestens eines der Walzensegmente über mindestens ein Pendelwälzlager (10) am Stützkörper (5) abgestützt ist.

6. Walze nach mindestens einem der Ansprüche 1 bis 5, **dadurch gekennzeichnet, dass** die Stelleinrichtungen (6) miteinander gekoppelt sind.

7. Walze nach Anspruch 6, **dadurch gekennzeichnet, dass** die Stelleinrichtungen (6) miteinander verstellbar gekoppelt sind.

8. Walze nach Anspruch 6 oder 7, **dadurch gekennzeichnet, dass** die Stelleinrichtungen (6) mittels einer Koppelstange (7) gekoppelt sind.

9. Walze nach mindestens einem der Ansprüche 1 bis 8, **dadurch gekennzeichnet, dass** die Stelleinrichtungen (6) von schwenkbar am Stützkörper (5) abgestützten Scheiben gebildet sind.

10. Walze nach mindestens einem der Ansprüche 1 bis 9, **dadurch gekennzeichnet, dass** das mindestens eine Lager (11) axial federnd gelagert ist.

11. Walze nach Anspruch 10, **dadurch gekennzeichnet, dass** das mindestens eine Lager (11) einen Federweg aufweist, der höchstens die Hälfte des axialen Weges beim Verschwenken des Walzensegments (3) ausmacht.

12. Walze nach mindestens einem der Ansprüche 1 bis 11, **dadurch gekennzeichnet, dass** die Walzensegmente (3) längsverschiebbar am Stützkörper (5) gelagert sind.

13. Walze nach mindestens einem der Ansprüche 1 bis 12, **dadurch gekennzeichnet, dass** die Walzensegmente (3) im Anlagebereich des mindestens einen Lagers (11) wenigstens im Teilbereich - in radialer Richtung betrachtet - konvex gekrümmt sind.

14. Walze nach Anspruch 13, **dadurch gekennzeichnet, dass** die Walzensegmente (3) im Anlagebereich des mindestens einen Lagers (11) in einer gedachten radialen Schnittebene durch die Walzenachse (1') wenigstens im Teilbereich kreisförmig gekrümmt sind, wobei ein Krümmungskreis (18) einen Radius und einen Mittelpunkt (17) aufweist, und der Radius dem axialen Abstand des mindestens einen Lagers (11) von der Schwenkachse (4) des Walzensegments (3) beträgt und der Mittelpunkt vom Schnittpunkt der Schwenkachse (4) mit der Walzenachse (1') radial so weit beabstandet ist wie das mindestens eine Lager (11).

## Claims

1. Roll for guiding and/or spreading a running product web (2), the roll (1) being rotatable about a roll axis (1'), in the region of which a supporting body (5) is provided, on which roll segments (3) are supported which can be pivoted about pivot axes (4) which run transversely with respect to the said supporting body (5), which roll segments are wrapped around at least partially by the product web (2), at least one bearing (11) which makes sliding or rolling contact with the roll segments (3) on both sides of the pivot axis (4) being provided between adjacent roll segments (3) **characterized in that** each of the roll segments (3) can be pivoted about each one of the pivot axes (4), and the outermost roll segments (3) are in an operative connection with actuating devices (6) which determine their pivoting position.

2. Roll according to Claim 1, **characterized in that** the at least one bearing (11) is a plain bearing.

3. Roll according to Claim 1 or 2, **characterized in that** the at least one bearing (11) is an anti-friction bearing.

4. Roll according to Claim 3, **characterized in that** the bearing (11) has rolling bodies (12) which bear against in each case both adjacent roll segments (3) .

5. Roll according to at least one of Claims 1 to 4, **characterized in that** at least one of the roll segments is supported on the supporting body (5) via at least one self-aligning anti-friction bearing (10) .

6. Roll according to at least one of Claims 1 to 5, **characterized in that** the actuating devices (6) are coupled to one another.

7. Roll according to Claim 6, **characterized in that** the actuating devices (6) are coupled adjustably to one another.

8. Roll according to Claim 6 or 7, **characterized in that** the actuating devices (6) are coupled by means of a coupling rod (7).

9. Roll according to at least one of Claims 1 to 8, **characterized in that** the actuating devices (6) are formed by discs which are supported pivotably on the supporting body (5).

10. Roll according to at least one of Claims 1 to 9, **characterized in that** the at least one bearing (11) is mounted in an axially sprung manner.

11. Roll according to Claim 10, **characterized in that** the at least one bearing (11) has a spring travel which makes up at most half the axial travel during pivoting of the roll segment (3).

12. Roll according to at least one of Claims 1 to 11, **characterized in that** the roll segments (3) are mounted longitudinally displaceably on the supporting body (5).

13. Roll according to at least one of Claims 1 to 12, **characterized in that**, in the bearing region of the at least one bearing (11), the roll segments (3) are curved convexly at least in the part region, as viewed in the radial direction.

14. Roll according to Claim 13, **characterized in that**, in the bearing region of the at least one bearing (11), the roll segments (3) are circularly curved in an imaginary radial sectional plane through the roll axis (1') at least in the part region, a circle of curvature (18) having a radius and a centre point (17), and the radius being the axial spacing of the at least one bearing (11) from the pivot axis (4) of the roll segment (3), and the centre point being spaced radially apart from the point of intersection of the pivot axis (4) with the roll axis (1') to the same extent as the at least one bearing (11).

## Revendications

1. Cylindre destiné à guider et/ou à déplisser une bande de marchandise déroulante (2), le cylindre (1) étant rotatif autour d'un axe de cylindre (1') dans la région duquel est prévu un corps de support (5) sur lequel sont supportés des segments de cylindre (3) pivotants autour d'axes de pivotement (4) s'étendant transversalement à ce corps de support, lesquels segments de cylindre sont entourés au moins partiellement par la bande de marchandise (2), au moins un palier (11) étant prévu entre des segments de cylindre adjacents (3), lequel palier est en contact de manière glissante ou roulante avec les segments de cylindre (3) de part et d'autre de l'axe de pivotement (4), **caractérisé en ce que** chacun des segments de cylindre (3) est pivotant respectivement autour de l'un des axes de pivotement (4), et les segments de cylindre (3) les plus à l'extérieur sont en liaison fonctionnelle avec des dispositifs de réglage (6) déterminant leur position de pivotement.

2. Cylindre selon la revendication 1, **caractérisé en ce que** ledit au moins un palier (11) est un palier lisse.

3. Cylindre selon la revendication 1 ou 2, **caractérisé en ce que** ledit au moins un palier (11) est un palier à roulement.

4. Cylindre selon la revendication 3, **caractérisé en ce que** le palier (11) comprend des corps de roulement (12) qui s'appliquent respectivement contre les deux segments de cylindre (3) adjacents.

5. Cylindre selon au moins l'une quelconque des revendications 1 à 4, **caractérisé en ce qu'**au moins l'un des segments de cylindre est supporté sur le corps de support (5) par le biais d'au moins un palier à roulement articulé (10).

6. Cylindre selon au moins l'une quelconque des revendications 1 à 5, **caractérisé en ce que** les dispositifs de réglage (6) sont accouplés les uns aux autres.

7. Cylindre selon la revendication 6, **caractérisé en ce que** les dispositifs de réglage (6) sont accouplés les uns aux autres de manière déplaçable.

8. Cylindre selon la revendication 6 ou 7, **caractérisé en ce que** les dispositifs de réglage (6) sont accouplés les uns aux autres au moyen d'une tige d'accouplement (7).

9. Cylindre selon au moins l'une quelconque des revendications 1 à 8, **caractérisé en ce que** les dispositifs de réglage (6) sont formés par des disques supportés de manière pivotante sur le corps de support (5).

10. Cylindre selon au moins l'une quelconque des revendications 1 à 9, **caractérisé en ce que** ledit au moins un palier (11) est monté axialement sur ressort.

11. Cylindre selon la revendication 10, **caractérisé en ce que** ledit au moins un palier (11) présente une course de ressort qui constitue au maximum la moitié de la course axiale lors du pivotement du segment de cylindre (3).

12. Cylindre selon au moins l'une quelconque des revendications 1 à 11, **caractérisé en ce que** les segments de cylindre (3) sont montés de manière déplaçable longitudinalement sur le corps de support (5) .

13. Cylindre selon au moins l'une quelconque des revendications 1 à 12, **caractérisé en ce que** les segments de cylindre (3) sont, dans la zone d'appui dudit au moins un palier (11), courbés de manière convexe au moins dans la zone partielle, considérée dans la direction radiale.

14. Cylindre selon la revendication 13, **caractérisé en ce que** les segments de cylindre (3) sont, dans la zone d'appui dudit au moins un palier (11), courbés de manière circulaire au moins dans la zone partielle dans un plan de coupe radial imaginaire passant par l'axe de cylindre (1'), un cercle de courbure (18) présentant un rayon et un centre (17), et le rayon étant égal à la distance axiale dudit au moins un palier (11) à l'axe de pivotement (4) du segment de cylindre (3), et le centre étant espacé radialement du point d'intersection de l'axe de pivotement (4) avec l'axe de cylindre (1') dans la même mesure que ledit au moins un palier (11).
